(19) **Europäisches Patentamt**

**European Patent Office**

**Office européen des brevets**

(11) **EP 0 360 548 B2**

(12) **NEW EUROPEAN PATENT SPECIFICATION**

(45) Date of publication and mention
of the opposition decision:
**08.03.2000 Bulletin 2000/10**

(45) Mention of the grant of the patent:
**23.03.1994 Bulletin 1994/12**

(21) Application number: **89309485.4**

(22) Date of filing: **19.09.1989**

(51) Int. Cl.[7]: **B01D 53/56**, B01J 23/28,
B01J 37/02, B01J 35/04

(54) **A process for producing a denitration catalyst**

Verfahren für die Herstellung eines Katalysators zur Entfernung von Stickoxiden

Procédé pour produire un catalyseur de dénitrification

(84) Designated Contracting States:
**DE FR GB IT**

(30) Priority: **19.09.1988 JP 23422488**

(43) Date of publication of application:
**28.03.1990 Bulletin 1990/13**

(73) Proprietor:
**BABCOCK-HITACHI KABUSHIKI KAISHA
Tokyo 100 (JP)**

(72) Inventors:
• **Teshima, Nobue
Kure Research Laboratory
Kure-shi Hiroshima-ken (JP)**
• **Kato, Yasuyoshi
Kure Research Laboratory
Kure-shi Hiroshima-ken (JP)**
• **Michimoto, Takashi
Akitsu Branch
Kure Works
Toyota-gun Hiroshima-ken (JP)**

(74) Representative:
**Pendlebury, Anthony et al
PAGE, WHITE & FARRER
54 Doughty Street
London WC1N 2LS (GB)**

(56) References cited:
**EP-A- 0 212 514        EP-A- 0 220 416
EP-A- 0 255 121        EP-A- 0 268 265
EP-A- 0 314 392        EP-A- 0 323 195
DE-B- 2 846 446        FR-A- 2 254 367
US-A- 4 206 084        US-A- 4 285 838
US-A- 4 370 262        US-A- 4 446 250**

EP 0 360 548 B2

Printed by Xerox (UK) Business Services
2.16.7/3.6

**Description**

This invention relates to a process for producing a denitration catalyst. More particularly it relates to a process for producing a denitration catalyst suitable for catalytically reducing nitrogen oxides contained in exhaust gases of a low dust content with ammonia. Exhaust gases of a low dust content may be those discharges from combustion of gas or liquid fuels such as LPG, naphtha, light oil and the like petroleum fractions.

Nitrogen oxides (NOx) in exhaust gases discharged from various boilers and the like are atmosphere-pollutive substances together with sulfur oxides (SOx).

Various processes for removing NOx, have been proposed and among these, a process of selectively reducing NOx with ammonia added to exhaust gases in the presence of a catalyst has been mainly utilized. Various such catalysts using titanium oxide as a base compound have been proposed JP-A-50-128681/1975 and JP-A-53-28148/1978) have currently been practically used.

US-A-4370262 discloses a catalytic structure for treating exhaust gases which is obtained by spraying molten aluminium onto the surface of a substrate such as wire netting in the presence of oxygen to give rise to a roughened surface. Catalytic substances such as a blend of titanium, tungsten, vanadium, molybdenum or iron mixed together with a binder in the form of a paste or slurry may be adhered onto the roughened surface.

In the case where exhaust gasses containing no dust such as LPG combustion gases are treated, a highly active and economical catalyst is required; thus besides those obtained by molding a catalyst itself into a honeycomb form or a spherical form, those obtained by coating catalyst compounds onto a ceramics honeycomb-form substrate or a metal substrate have been proposed to reduce the quantity of the catalyst compounds used. However, a catalyst obtained by merely coating catalyst compounds onto a metal substrate has a drawback that it has a low catalyst strength and a small quantity of the catalyst compounds supported thereon so that it is difficult to retain its high activity.

In order to overcome the drawback, various processes have been proposed such as a process of improving the catalyst strength by adding various binders to catalyst compounds (JP-A-49-58093/1974), a process of roughening the metal surface, thereby increasing the quantity of the catalyst compounds supported thereon to obtain a high activity of the catalyst (JP-A-51-116168/1976), etc. However, such problems have been raised that when binders are added to improve the catalyst strength, the catalyst activity lowers, while when the metal surface is roughened and increased with the catalyst compounds supported thereon, the catalyst compounds are liable to peel off from the substrate.

Further, in the case where a sheet-form catalyst obtained by having catalyst compounds supported on a metal plate substrate is used, it has been required to make the plate catalyst thinner than conventional catalysts so that the distance (clearance) between the plate catalysts provided inside the flow path of exhaust gases can be narrowed to make the catalyst apparatus compact and reduce the quantity of the catalyst compounds used, thereby saving the cost. Further, it is desired that the catalyst performance should not be lower than that of a conventional catalyst.

An object of the present invention is to provide a process for producing a denitration catalyst having overcome the above-mentioned drawbacks of the prior art and even when the quantity of the catalyst supported on a metal substrate is small, capable of obtaining a catalyst having a high activity and a superior resistance to peeling-off.

The present invention resides in:

The invention will now be described further by way of example only, with reference to the drawings in which:

Fig. 1 shows a view illustrating a process for producing an expanded metal lath as a substrate used in the present invention, (A), (B) and (C) showing a process for preparing an expanding metal lath, (C) showing a cross sectional view of the expanded metal lath, and (D) showing a plane view of the expanded metal lath.

Fig. 2 shows a view illustrating the function of molybdenum at the time of precalcination of catalyst compounds.

Fig. 3 shows a view illustrating the function of molybdenum at the time of coating catalyst compounds onto a metal substrate and calcining it.

Fig. 4 shows a chart illustrating the relationship between the percentage denitration and percentage peeling-off of catalyst and the quantity of molybdenum added.

Fig. 5 shows a chart illustrating the relationship between the percentage denitration and percentage peeling-off of catalyst and the quantity of aluminum metal-sprayed.

Fig. 6 shows a chart illustrating the relationship between the percentage denitration and percentage peeling-off of catalyst and the quantity of catalyst supported.

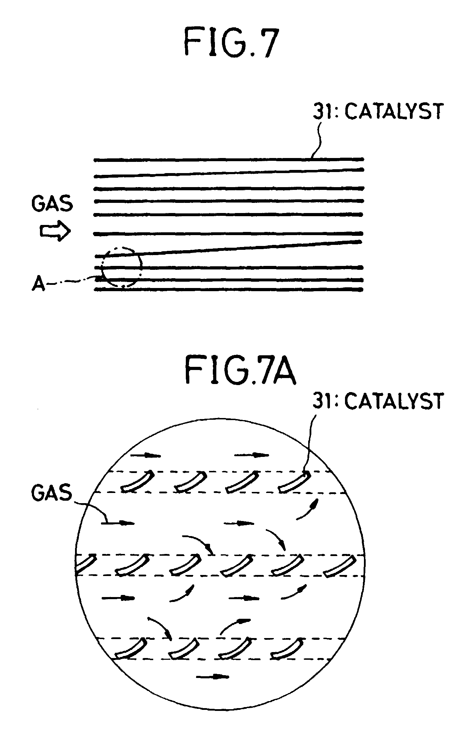

Fig. 7 shows a chart illustrating the state of gas flow in the case where sheet-form catalysts using expanded metal laths as substrates are arranged parallel and incorporated into a unit.

Fig. 7A shows an enlarged cross-sectional view of part A in Fig. 7.

Fig. 8 shows a photograph ($\times 4$) of a catalyst using an expanded metal lath as a substrate.

The catalyst according to the present invention comprises titanium oxide, molybdenum oxide and, optionally, vanadium oxide supported on a metal substrate, and the respective proportions thereof used are in the range of Ti/Mo/V =97-65/3-20/0-15 in an atomic percentage. A preferable proportion of Mo is in the range of 5 to 15 in an atomic percentage. If the proportion of molybdenum used is less than 3 in an atomic percentage, resistance to peeling-off is inferior, while if it exceeds 20, the effectiveness of resistance to peeling-off is not more improved. Vanadium oxide is not essential to be added, but if it is added to titanium oxide and molybdenum oxide, it is possible to obtain a catalyst having a further higher activity, but if its proportion used exceeds 15 in an atomic percentage, more effectiveness is not obtained.

Catalyst raw materials used in the present invention are not limited, if they afford titanium oxide, molybdenum oxide or vanadium oxide at the time of calcination of a catalyst. That is, any compounds of Ti, Mo or V capable of forming an aqueous slurry thereof such as metatitanic acid, ammonium molybdate, ammonium metavanadate, etc. are usable.

As the above catalyst compounds are calcined before slurrying or being supported on a substrate, the shrinkage of catalyst particles after support is small and a catalyst having a small particle size of catalyst compounds is obtained. Namely, since molybdenum oxide ($MoO_3$) has a high vapor pressure, it vaporizes at calcination and coats or adsorbs on the surface of $TiO_2$ particles so that $MoO_3$ is present between the respective $TiO_2$ particles. Thus, even when the catalyst compounds are formed into a definite shape and again calcined, $TiO_2$ particles do not adhere to one another to crystallize or sinter, but remain in the form of small particles, and also there occurs no shrinkage at calcination due to sintering; hence it is possible to obtain a dense and strong catalyst product. Further, since catalyst compounds are present in the form of fine particles, it is possible to obtain a slurry having a high concentration and a high stability without any additives at the time of slurry preparation. The calcination temperature is preferred to be 500°C or higher.

In addition, since $MoO_3$ has a good compatibility with the metal substrate and increases the contact area at the time of calcination, the adhesion of the catalyst compounds to the substrate is remarkably improved.

The expanded metal substrate used in the present invention has no particular limitation and any of stainless steel, mild steel, etc. are usable. In the case of a metal substrate obtained by subjecting the metal surface to spray with molten aluminum, etc. to form a roughened surface, contact of the metal surface with the catalyst compounds is improved as well as the catalyst surface area increases, thereby the catalyst activity and resistance to peeling-off are both improved.

The denitration catalyst according to the present invention is obtained by adding water to the above catalyst compounds to form a slurry, applying the slurry onto the above metal substrate, drying and preferably calcining the resulting material. The slurry concentration may be of such an extent that the slurry can be applied onto the substrate. The process of applying the slurry onto the substrate has no particular limitation. For example, the process may be carried out by immersing the substrate in the slurry, removing superfluous liquid by a centrifugal separator, blowing off, suction, impact or the like means and drying. Thus obtained catalyst is preferably calcined at about 500°C.

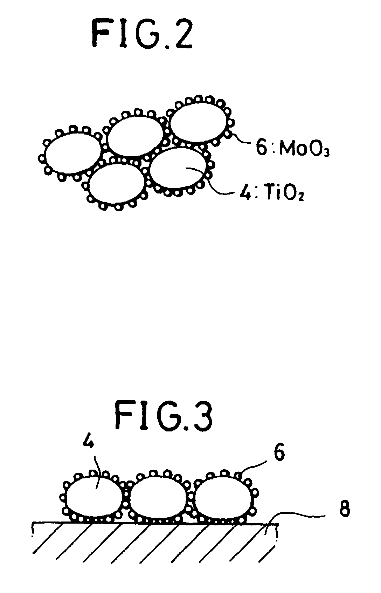

When catalyst compounds comprising titanium compounds and molybdenum compounds are subjected to a primary calcination at about 500°C, $MoO_3$ has a higher vapor pressure at the temperature to coat or adsorb the surface of $TiO_2$ particles as shown in Fig. 2 so that $MoO_3$ 6 is present among the respective $TiO_2$ particles 4; and when the particles are ground, the grindability of the particles is improved to obtain fine particles. When fine particles of catalyst compounds are increased and water is added thereto to form a slurry, it is possible to lower the slurry viscosity even when the particle concentration is high. Hence it is possible to immerse a substrate in a high concentration slurry and have the slurry supported on the substrate. When the high concentration slurry is supported, it is possible to form a high density catalyst layer having a high strength on the substrate. When catalyst compounds (particles) are supported on a metal substrate, followed by calcination, there is generally raised a problem that the catalyst particles shrink due to sintering of $TiO_2$ particles by heat to generate cracks. Whereas in the case of the present invention, since $MoO_3$ is present among $TiO_2$ particles, contact of $TiO_2$ particles themselves is hindered to prevent $TiO_2$ particles from sintering so that shrinkage due to sintering is reduced and crack generation can be prevented; hence a strength reduction of the catalyst layer does not occur. Further, when calcination is carried out after the catalyst has been supported on a metal substrate 8, $MoO_3$ particles 6 coating $TiO_2$ particles 4 contacts with the metal substrate 8 to react partially therewith, as shown in Fig. 3; hence adhesion of catalyst compounds onto the metal substrate is improved so that the catalyst compounds is not peeled off from the substrate.

The present invention will be described in more detail by way of Examples, but it should not be construed to be limited thereto.

Example 1

Ammonium molybdate ($3(NH_4)_2O \cdot 7MoO_3 \cdot 4H_2O$)(3.81kg) and ammonium metavanadate ($NH_4VO_3$)-(1.04kg) were added to metatitanic acid (50kg) containing 30% by weight of titanium oxide, followed by kneading the mixture on heating by means of a kneader to obtain a pasty slurry containing 35% by weight of water. This slurry was granulated by an extrusion-granulator, followed by drying by a fluidized bed dryer, calcining at 550°C for 2 hours, grinding the resulting material into powder having a size of 90% or more of particle diameter of 0.149 mm or less [100 mesh pass] by means of a hammer mill and adding water to the powder to obtain a slurry. As to the quantity of water added at that time, a water content of 35 to 50% by weight, preferably 40 to 48% by weight afforded superior slurry properties.

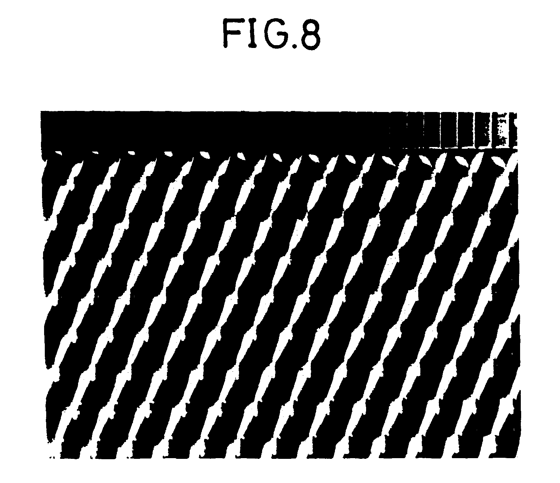

In this Example, water (4.6kg) was added to the resulting powder (5.4kg) to obtain a catalyst slurry, followed by immersing in this slurry, a SUS 304 expanded metal lath of 0.2mm thick, rotating them by means of a centrifugal separator to remove superfluous slurry, drying the resulting material and calcining at 500 ° C for 2 hours to obtain a catalyst. The quantity of the catalyst compounds supported was 150 $g/m^2$ per unit surface area of the catalyst. This value is very small as compared with 800 to 1,000$g/m^2$ in the case of a conventional catalyst disclosed in JP-A-63-111945/1988. The surface area in this case refers to a projected area of one surface of the catalyst including the openings of the expanded metal. The object of removing the superfluous slurry by means of a centrifugal separator is to prevent the openings of the expanded metal from clogging with slurry and to obtain a porous metal plate catalyst. As to the process of the centrifugal separation can be replaced by air-flowing, vibration-impacting, etc. In addition, as seen from Fig. 8 showing a plane view of the catalyst, in a magnification of 4, the openings of the expanded metal lath are not filled with the catalyst, but the whole surface area of the catalyst is thinly coated with the catalyst compounds.

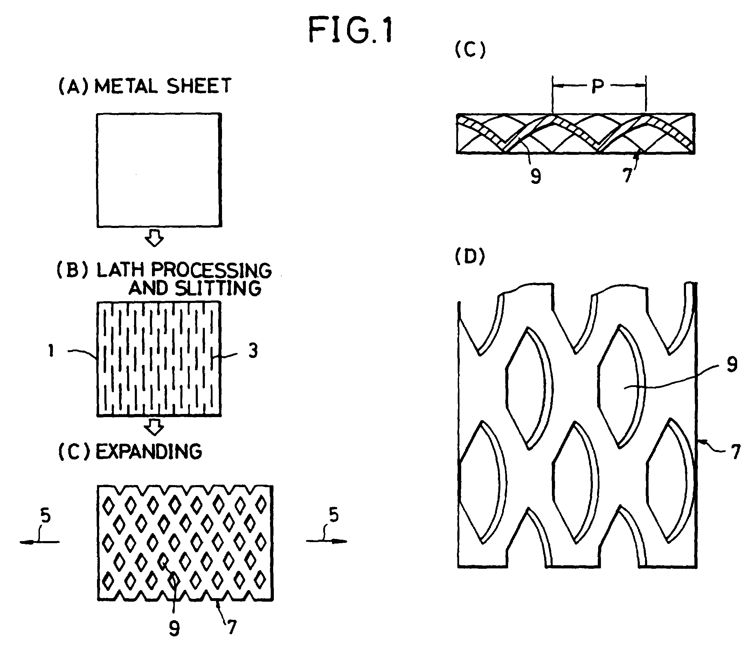

A process for producing the above expanded metal lath is illustrated in Fig. 1. A stainless steel sheet (SUS 304) 1 of 0.2mm thick is cut to have zigzag slits 3 as shown in Fig. 1(A) and (B), followed by expanding the sheet in the direction 5 perpendicular to that of the slits 3 so that the slits are opened to obtain an expanded metal lath 7. The cross-section of the metal 7 is shown in Fig. 1(C) and its plane view is shown in Fig. 1(D). An expanded metal lath of 0.8mm thick is obtained from the stainless steel sheet of 0.2mm thick. Pitch p of the openings 7 was 22mm and openings 9 occupied about 79% of the surface area.

Examples 2-4

Example 1 was repeated except that the quantity of ammonium molybdate added was changed to 1.03kg, 2.12kg or 8.29kg, to obtain a catalyst.

Comparative example 1

Example 1 was repeated except that no ammonium molybdate was added, to obtain a catalyst.

Examples 5-7

Example 1 was repeated except that a substrate obtained by subjecting, in advance, a SUS expanded metal to aluminum metal-spray in an oxidation atmosphere in a rate of 50$g/m^2$, 100$g/m^2$ or 250$g/m^2$, used to obtain catalysts.

Examples 8-11

Example 1 was repeated except that the quantity of ammonium metavanadate added was changed to 0kg, 0.5kg, 2.14kg or 4.39kg, to obtain a catalyst.

Examples 12 and 13

Example 1 was repeated except that an expanded metal lath obtained by subjecting the substrate to aluminum-spray in an amount of 50$g/m^2$ was used and the quantity of the catalyst compounds supported was changed to 100$g/rn^2$ or 200$g/m^2$ by controlling the degree of centrifugal separation, to obtain catalysts.

Use example 1

In order to test the denitration activities of the respective catalysts obtained in the above Examples and Comparative example, the percentage denitrations thereof were measured according to the conditions shown in Table 1.

Table 1

| Catalyst dimension | 20mm x 100mm |
|---|---|
| Gas composition | |
| NO | 200ppm |

Table 1 (continued)

| Catalyst dimension | 20mm x 100mm |
|---|---|
| Gas composition | |
| NH$_3$ | 240ppm |
| CO$_2$ | 12% |
| O$_2$ | |
| H$_2$O | |
| N$_2$ | Balance |
| Gas quantity | 184$\ell$/h |
| Temperature | 350°C |

In order to test the strength of catalysts, a piece of catalyst (100mm x 100mm) was ten times dropped onto an iron plate from a height of 1m, followed by measuring the weight reduction of the catalyst and obtaining the percentage peeling-off according to the following equation:

$$\text{Percentage peeling-off} = \frac{\text{catalyst wt. before test (g)-catalyst wt. after test (g)}}{\text{quantity of catalyst supported (g)}} \times 100 \ (\%)$$

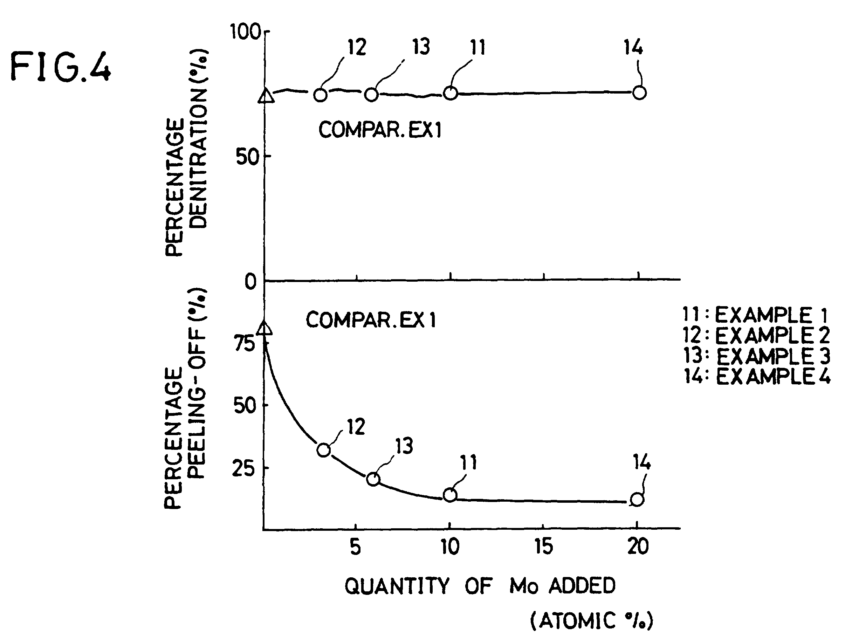

Fig. 4 shows a chart obtained by plotting the percentages denitration and the percentages peeling-off of catalysts obtained in Examples 1-4 and Comparative example 1 relative to the quantities of Mo added. As seen from this chart, Mo addition can notably reduce the percentage peeling-off of the catalyst and its quantity added is effective in 3 to 20 atomic %, preferably 5 to 15 atomic %.

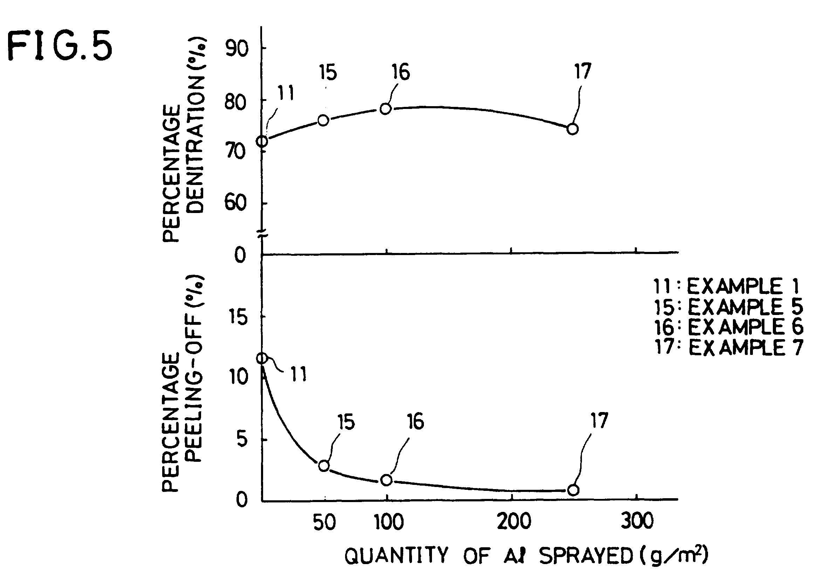

Fig. 5 shows a chart obtained by plotting the percentages denitration and the percentages peeling-off of the catalysts obtained in Examples 1 and 5-7 relative to the quantities of A$\ell$ metal-spray. As seen from this chart A$\ell$ metal-spray can further reduce the percentage peeling-off and also can afford a catalyst having a superior activity and strength.

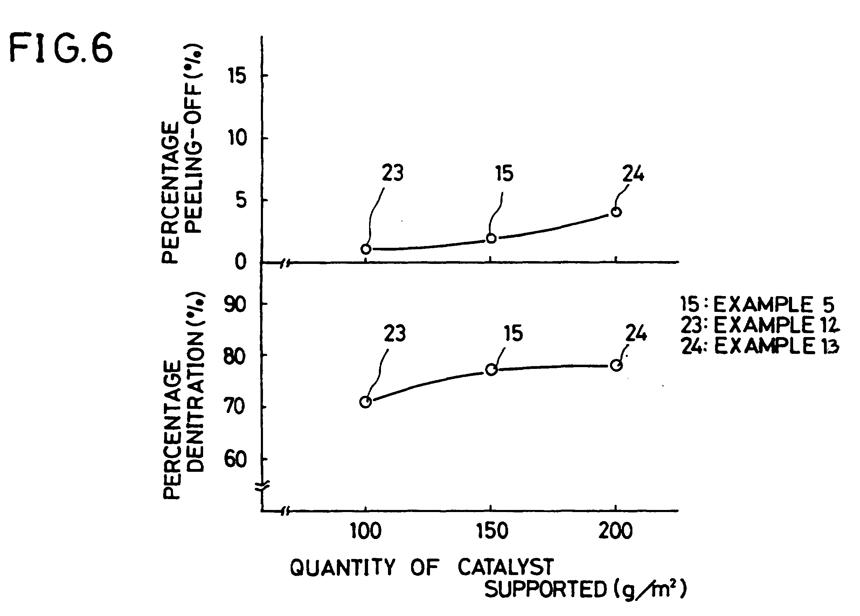

Fig. 6 shows a chart obtained by plotting the percentages denitration and the percentages peeling-off of the catalysts obtained in Examples 5, 12 and 13 relative to the quantities of the catalyst compounds supported. As seen from this chart, even when the quantity of the catalyst supported is 1/5 (150g/m$^2$) or less that of conventional catalyst (Comparative example 2 described later), the catalysts of the present invention have the same degree of percentage denitration and percentage peeling-off as those in the case of conventional catalyst.

Table 2 shows the measurement results of the percentages denitration and the percentages peeling-off of the catalysts obtained in Examples 8-11. As seen from this Table, vanadium addition can afford a catalyst having a further higher activity.

Table 2

| | Percentage denitration(%) | Percentage peeling-off(%) |
|---|---|---|
| Ex. 8 | 60 | 13 |
| 9 | 68 | 12 |
| 10 | 81 | 12 |
| 11 | 75 | 14 |

Comparative example 2

Water (3.4kg) and inorganic fibers of Kaolin (1.5kg) were added to the catalyst powder (10kg) obtained in Example 1, followed by kneading the mixture by means of a kneader to obtain a catalyst paste, applying this paste under pressure onto the same expanded metal substrate as used in Example 1 by means of rolls, air-drying the resulting material and calcining it at 500°C for 2 hours to obtain a sheet-form catalyst. The quantity of the catalyst compounds supported was 820g/m$^2$. Its percentage denitration and percentage peeling-off were measured as in the above Use examples 1 and 2 to give 75% and 15%, respectively.

As seen from the above results, the catalyst obtained according to the production process of the present invention has a percentage denitration and a percentage peeling-off to the same degree as that in the case of catalyst obtained according to conventional production process, in 1/5 or less the quantity of the latter catalyst compounds supported.

According to the production process of the present invention, it is possible to obtain a catalyst having a high activity and a superior resistance to peeling-off in a state of a small quantity of catalyst compounds supported. Further, use of an expanded metal lath as a substrate affords an effectiveness mentioned below. A catalyst using a flat sheet as a substrate and a catalyst using an expanded metal lath as a substrate were incorporated in a unit at pitch of 6mm, respectively, and the respective percentages denitration were compared under the conditions shown in Table 3 listed below. The results are shown also in Table 3.

Table 3

| Test conditions: | Catalyst dimension: 150mm $\times$ 150mm | |
|---|---|---|
| | Length of the unit: 500mm | |
| | Filling pitch: 6mm | |
| | Gas quantity: 172Nm$^3$/h | |
| | Temperature: 350°C | |
| | [NH$_3$]/[NO] molar ratio: 1.2 | |
| Substrate: | Flat sheet | Expanded metal lath |
| Percentage denitration (%): | 72 | 78.3 |

As seen from the results, the catalyst unit using an expanded metal lath exhibited a higher percentage denitration than that in the case of the catalyst unit using a flat sheet catalyst.

The reason consists in that use of a flat sheet as a substrate causes fluctuations of gas streams between the flat sheet catalysts so that a large quantity of gas flows at a broad path between the sheets, while only a small quantity of gas flows at a narrow path, to cause channeling or deviation of gas stream, thereby reducing the percentage denitration. Whereas, in the case of an expanded metal lath as a substrate, the gas not only flows through paths between the substrates, but also passes through the openings of the expanded metal lath and flows in other paths to reduce channeling. Further, since the gas streams cause turbulence to reduce a boundary film formed along the surface if the catalyst. Thus, use of an expanded metal lath as a substrate makes it possible to obtain a higher percentage denitration than that in the case of use of a flat sheet.

**Claims**

1. A process for producing a denitration catalyst for reducing with ammonia nitrogen oxide contained in an exhaust gas, which comprises adding water to catalyst raw materials, which materials upon calcination afford titanium oxide, molybdenum oxide and, optionally, vanadium oxide: making a slurry, the water content in said slurry being made 35 to 50% by weight; supporting said slurry on a metal substrate: and drying the product, characterised in that the respective mole proportions of Ti/Mo/V are in the range 97-65/3-20/0-15 percent and said catalyst raw materials are calcined before slurrying or being supported on the substrate, and powdered, wherein said metal substrate is an expanded metal lath with a plurality of openings and is coated with a slurry of catalyst raw materials by immersion so that the quantity of said catalyst supported onto said metal substrate is in the range of 100 to 200 g/m$^2$, wherein the surface area in this case refers to a projected area of one surface of the catalyst including the openings of the expanded metal, wherein the openings of the expanded metal lath are prevented from clogging with the slurry, by removing superfluous slurry from the openings.

2. A process for producing a denitration catalyst according to claim 1, wherein said mole proportion of Mo is in the range of 5 to 15%.

3. A process for producing a denitration catalyst for reducing nitrogen oxide according to claim 1 or claim 2, wherein said metal substrate is an expanded metal lath made from a thin stainless steel sheet and sprayed with molten aluminium in the quantity of 50 to 250g/m$^2$.

6

4. A denitration catalyst for reducing with ammonia nitrogen oxide contained in an exhaust gas, which comprises precalcined particles of titanium oxide, molybdenum oxide and, optionally, vanadium oxide, supported on a metal substrate, characterised in that the respective mole proportions of Ti/Mo/V are in the range 97-65/3-20/0-15 and the particle size of molybdenum oxide is smaller than that of titanium oxide, the molybdenum oxide particles adsorbing around the titanium oxide particles, whereby the molybdenum oxide particles are present between the respective titanium oxide particles so as to prevent sintering of the titanium oxide particles, wherein said metal substrate is an expanded metal lath with a plurality of openings and is coated with a slurry of catalyst raw materials by immersion so that the quantity of said catalyst supported onto said metal substrate is in the range of 100 to 200 $g/m^2$, wherein the surface area in this case refers to a projected area of one surface of the catalyst including the openings of the expanded metal, wherein the openings of the expanded metal lath are prevented from clogging with the slurry by removal of superfluous slurry from the openings.

5. A denitration catalyst according to claim 4, wherein said mole proportion of Mo is in the range of 5 to 15%.

6. A denitration catalyst according to claim 4 or 5, wherein said metal substrate is an expanded metal lath made from a thin stainless steel sheet and sprayed with molten aluminium in the quantity of 50 to 250$g/m^2$.

7. Use of a denitration catalyst according to any one of claims 4 to 6, for reducing with ammonia nitrogen oxide contained in an exhaust gas of a low dust content.

**Patentansprüche**

1. Verfahren zum Herstellen eines Denitrierungskatalysators für das Reduzieren mit Ammoniak von in einem Abgas enthaltenen Stickstoffoxid, wobei das Verfahren umfaßt: Zugeben von Wasser zu Katalysator-Rohmaterialien, die beim Kalzinieren Titanoxid, Molybdänoxid und wahlweise Vanadiumoxid liefern; Herstellen einer Aufschlämmung, wobei der Wassergehalt in dieser Aufschlämmung auf 35 bis 50 Gew.-% eingestellt wird; Aufbringen der Aufschlämmung auf einen Metallträger; und Trocknen des Produkts, dadurch gekennzeichnet, daß die jeweiligen Molverhältnisse von Ti/Mo/V im Bereich 97-65/3-20/0-15% liegen und die Katalysator-Rohmaterialien vor dem Aufschlämmen oder Aufbringen auf den Träger kalziniert werden und sodann pulverisiert werden, wobei der Metallträger ein Streckmetallgitter mit einer Anzahl von Öffnungen ist und mit einer Aufschlämmung von Katalysator-Rohmaterialien durch Eintauchen derart beschichtet wird, daß die Menge des auf dem Metallträger gehaltenen Katalysators im Bereich von 100 bis 200 $g/m^2$ liegt, wobei der Flächeninhalt sich in diesem Fall auf einen vorstehenden Bereich einer Oberfläche des Katalysators einschließlich der Öffnungen des Streckmetalls bezieht, und daß die Öffnungen des Streckmetallgitters daran gehindert sind, sich mit der Aufschlämmung zuzusetzen, indem überflüssige Aufschlämmung von den Öffnungen entfernt wird.

2. Verfahren zum Herstellen eines Denitrierungskatalysators nach Anspruch 1, bei dem der Molanteil von Mo im Bereich von 5 bis 15% liegt.

3. Verfahren zum Herstellen eines Denitrierungskatalysators zum Reduzieren von Stickstoffoxid nach Anspruch 1 oder 2, bei dem der Metallträger ein Streckmetallgitter ist, das aus einer dünnen rostfreien Stahlfolie hergestellt und mit geschmolzenem Aluminium in der Menge von 50 bis 250 $g/m^2$ besprüht ist.

4. Denitrierungskatalysator zum Reduzieren mit Ammoniak von in einem Abgas enthaltenem Stickstoffoxid, der aufweist vorkalzinierte Teilchen von Titanoxid, Molybdänoxid und wahlweise Vanadiumoxid, aufgebracht auf einen Metallträger, dadurch gekennzeichnet, daß die jeweiligen Molverhältnisse von Ti/Mo/V im Bereich 97-65/3-20/0-15 liegen und die Teilchengröße des Molybdänoxids kleiner ist als diejenige des Titanoxids, die Molybdänoxidteilchen sich rings um die Titanoxidteilchen adsorbieren, wobei die Molybdänoxidteilchen zwischen den jeweiligen Titanoxidteilchen derart anwesend sind, daß sie ein Sintern der Titanoxidteilchen verhindern, wobei der Metallträger ein Streckmetallgitter mit einer Anzahl von Öffnungen und mit einer Aufschlämmung von Katalysator-Rohmaterialien durch Eintauchen derart beschichtet ist, daß die Menge des auf dem Metallträger gehaltenen Katalysators im Bereich von 100 bis 200 $g/m^2$ liegt, wobei der Flächeninhalt in diesem Fall sich auf einen vorstehenden Bereich einer Oberfläche des Katalysators einschließlich der Öffnungen des Streckmetalls bezieht, und daß die Öffnungen des Streckmetallgitters daran gehindert sind, sich mit der Aufschlämmung zuzusetzen, indem überflüssige Aufschlämmung von den Öffnungen entfernt wird.

5. Denitrierungskatalysator nach Anspruch 4, bei dem der Molanteil von Mo im Bereich von 5 bis 15% liegt.

**6.** Denitrierungskatalysator nach Anspruch 4 oder 5, bei dem der Metallträger ein Streckmetallgitter ist, das aus einer dünnen rostfreien Stahlfolie hergestellt und mit geschmolzenem Aluminium in der Menge von 50 bis 250 g/m$^2$ besprüht ist.

**7.** Verwendung eines Denitrierungskatalysators nach einem der Ansprüche 4 bis 6 zum Reduzieren mit Ammoniak von in einem Abgas mit niedrigem Staubgehalt enthaltenen Stickstoffoxid.

**Revendications**

**1.** Procédé pour produire un catalyseur de dénitrification pour réduire avec de l'ammoniac les oxydes d'azote contenus dans un gaz d'échappement, comprenant les étapes d'addition d'eau aux composés bruts du catalyseur, lesquels composés sont susceptibles de produire de l'oxyde de titane, de l'oxyde de molybdène et optionnellement de l'oxyde de vanadium lorsqu'ils sont soumis à une calcination ; de formation d'une suspension dont la teneur en eau est fixée entre 35 à 50 % en poids ; de dépôt de ladite suspension sur un substrat métallique ; et de séchage du produit, caractérisé en ce que les proportions respectives en moles de Ti/Mo/V sont comprises dans des intervalles de 97-65/3-20/0-15 pour cent et lesdits composés bruts du catalyseur sont calcinés avant la formation de la suspension ou le dépôt sur le substrat et mis en poudre, où ledit substrat métallique est un grillage en métal déployé avec une pluralité d'ouvertures et est revêtu avec une suspension de composés bruts du catalyseur par immersion de sorte que la quantité dudit catalyseur déposée sur ledit substrat métallique soit comprise dans l'intervalle de 100 à 200 g/m$^2$ où l'aire de surface dans ce cas correspond à une aire de projection d'une surface du catalyseur comprenant les ouvertures du métal déployé, procédé dans lequel on empêche les ouvertures du grillage en métal déployé d'être bouchées par la suspension en enlevant la suspension superflue des ouvertures.

**2.** Procédé pour produire un catalyseur de dinitrification selon la revendication 1, dans lequel ladite proportion en moles de Mo est comprise dans l'intervalle de 5 à 15 pour cent.

**3.** Procédé pour produire un catalyseur de dénitrification pour réduire l'oxyde d'azote selon la revendication 1 ou la revendication 2, dans lequel le substrat métallique est un grillage en métal déployé formé d'une mince feuille d'acier inoxydable et ayant reçu une pulvérisation d'aluminium fondu en quantité comprise entre 50 et 250 g/m$^2$.

**4.** Catalyseur de dénitrification pour réduire les oxydes d'azote contenus dans un gaz d'échappement, qui comprend les particules précalcinées d'oxyde de titane, d'oxyde de molybdène et optionnellement d'oxyde de vanadium déposés sur un substrat métallique, caractérisé en ce que les proportions en mole respectives de Ti/Mo/V sont comprises dans des intervalles de 97-65/3-20/0-15 pour cent et la taille des particules d'oxyde de molybdène est plus petite que celle des particules d'oxyde de titane, les particules d'oxyde de molybdène s'absorbant autour des particules d'oxyde de titane de sorte qu'ainsi les particules d'oxyde de molybdène sont présentes entre les particules respectives d'oxyde de titane de manière à empêcher le frittage des particules d'oxyde de titane, où ledit substrat métallique est un grillage en métal déployé avec une pluralité d'ouvertures et est revêtu d'une suspension des composés bruts du catalyseur par immersion de sorte que la quantité dudit catalyseur déposé sur ledit substrat métallique soit comprise dans un intervalle de 100 à 200 g/m$^2$, où l'aire de surface dans ce cas correspond à une aire de projection d'une surface du catalyseur comprenant les ouvertures du métal déployé, dans lequel on empêche les ouvertures du grillage en métal déployé d'être bouchées par la suspension en enlevant la suspension superflue des ouvertures.

**5.** Catalyseur de dénitrification selon la revendication 4, dans lequel ladite proportion en mole de Mo est comprise dans un intervalle de 5 à 15 %.

**6.** Catalyseur de dénitrification selon la revendication 4 ou 5, dans lequel ledit substrat métallique est un grillage en métal déployé fabriqué à partir d'une feuille d'acier inoxydable fine ayant reçu une pulvérisation d'aluminium fondu en quantité comprise entre 50 et 250 g/m$^2$.

**7.** Utilisation d'un catalyseur de dénitrification selon l'une quelconque des revendications 4 à 6, pour réduire avec de l'ammoniac les oxydes d'azote contenus dans un gaz d'échappement ayant un faible taux de poussière.

# FIG.1

## (A) METAL SHEET

## (C)

P

9    7

## (B) LATH PROCESSING AND SLITTING

1    3

## (D)

9

7

## (C) EXPANDING

5    5

9    7

EP 0 360 548 B2

# FIG.2

6: MoO₃

4: TiO₂

# FIG.3

# FIG.4

COMPAR. EX1

COMPAR. EX1

11: EXAMPLE 1
12: EXAMPLE 2
13: EXAMPLE 3
14: EXAMPLE 4

PERCENTAGE DENITRATION(%)

PERCENTAGE PEELING-OFF (%)

QUANTITY OF Mo ADDED (ATOMIC %)

EP 0 360 548 B2

FIG.5

11: EXAMPLE 1
15: EXAMPLE 5
16: EXAMPLE 6
17: EXAMPLE 7

FIG.6

EP 0 360 548 B2

## FIG.7

31: CATALYST

GAS

A

## FIG.7A

31: CATALYST

GAS

## FIG.8